# EUROPEAN PATENT SPECIFICATION

(11) **EP 1 318 176 B1**
(45) Date of publication and mention of the grant of the patent: **26.01.2011**
(21) Application number: 02258463.5
(22) Date of filing: 06.12.2002
(51) Int. Cl.: C08L 77/00, C08L 67/02

(54) **Color enhancement for resin blends**
Farbverstärkung in Harzmischungen
Compositions de résines ayant une coloration améliorée

(30) Priority: 07.12.2001 US 338206 P; 07.12.2001 US 338251 P; 20.11.2002 US 300163
(43) Date of publication of application: 11.06.2003
(73) Proprietor: SABIC Innovative Plastics IP B.V., 4612 PX Bergen op Zoom (NL)
(72) Inventor: Sunderland, Nicolas J., Evansville, Indiana 47712 (US); Hein, Christopher L., Evansville, Indiana 47712 (US); Dhawan, Sandeep, Evansville, Indiana 47712 (US)
(74) Representative: Müller, Frank Peter

(56) References cited:
- EP-A- 0 940 443
- WO-A-00/49089
- WO-A-02/00974
- JP-A- 02 145 808
- JP-A- 59 030 854
- US-A- 3 018 272
- US-A- 4 451 606

## Description

The invention relates generally to a process for preparing an article from a thermoplastic composition, the melt formed polymeric materials obtained by the process are having enhanced interaction with dyes.

Coloration of articles, particularly articles such as textile and fibers has a long history, and the science of dyeing, initially of natural fibers such as flax, cotton and wool, has been under continuous development since Neolithic times. The appearance of man-made fibers, (e.g. cellulosics, acrylics, polyamides and polyesters), stimulated further developments in dyeing, and this method of coloring of fibers and articles made therefrom continues to be the most-practised technique for the production of colored fiber-based articles of manufacture. Methods and apparatus for carrying out the analysis of color and appearance of articles such as fibers are well known to those skilled in the art.

In the analysis of color in articles, there are two effects which might be observed if the sample is illuminated or observed at a number of different angles (for an example of multi-angle appearance testing of materials, see US Patent No. 4,479,718). The total amount of light reflected from the sample, per unit area, may change. The perceived color may also change. Unless such effects are specifically desired for particular aesthetic effects in a final article of manufacture, the appearance of either may result in the rejection of the fiber by the prospective customer. Eradication or reduction of such effects thus is important in obtaining first quality product.

Thermoplastic resins that are often used for the making of colored articles include polyesters and polyamides. They have excellent properties such as chemical, heat and light stability, and high strength, which lend their use for fiber applications. However, polyamides and polyesters are difficult to color with cationic dyes due to the lack of dye sites that have an affinity for cationic dyes. It is known in the art to copolymerize polyamides or polyesters with sulfur compounds such as the sodium salt of 5-sulfoisophthalic acid or the sodium salt of dimethyl-5-isophthalate in order to achieve cationic dyeability or anionic dye resistance, especially in the fiber art. US Patent Nos. 3,542,743; 3,640,942; 3,898,200; 5,108,684; and 5,912,409 disclose the use of copolymerizing sulfonated monomers with various polyamides. These references do not specifically mention the effect of cationic or anionic dyeability of polyester-based ionomers when blended into nylon.

US Patent No. 6,312,805 discloses a small molecule cationic dyeability modifier which can be incorporated into polyesters and polyamides via the incorporation of the additive modifier during the monomer polymerization step. US Patent No. 6,334,877 describes a sulfonated polyester concentrate for use for anionic dye resistance, wherein the preparation of the concentrate involves adding a small molecule sulfonated additive to a performed polyester, which is then added to a polyamide. In these references, aggregation of the small molecule sulfonated additive is of concern, as well as potential degradation of the polyamide upon extrusion.

There exists a need to provide a polymeric cationic dyeable additive which can render polyamides or polyesters cationically dyeable, for finished articles that exhibit improved color and appearance and reduced variation in color and appearance. It is desirable that this additive be melt compounded with polyamides or polyesters prior to extrusion, or fed during the extrusion at levels that can be tuned by the operator. Applicants have surprisingly found a polymeric additive, wherein the small molecule sulfonated additive is chemically incorporated into the polyester / polyamide during polymerization, in order to minimize aggregation of the sulfonated additive and subsequent degradation of the polyester / polyamide. The polymeric additive of the present invention offers compatibilization with the polyamide or polyester matrix, providing a composition that is cationically dyeable and / or anionic dye resistant, in pellet or powder form. The final film, fiber, or molded article made from the resin composition of the present invention has a level of the additive that can be tuned by the operator.

### SUMMARY OF THE INVENTION

The use of a sulfonated polyester ionomer resin in a polyamide or polyester material, such as a fiber or sheet, may enhance the cationic dyeability of the sheet or drawn fiber. The formed thermoplastic material is contacted with a solution containing the dye to effect a color change to the article which is typically a fiber or a film.

The addition of the polymeric ionomer allows for enhanced interactions of cationic dyes such as, azo or anthraquinone-based dyes, resulting in higher color strengths. Additionally, the ionomeric groups allow for greater dye retention upon exposure to solutions of low pH. At near boil conditions, acid dyeability is observed with a blend of Nylon 66 and polyester based ionomer. Typical polyester-based ionomers are comprised of sulfonated isophthalates monomers such as Na-DMSIP and Na-SIPA, or other monovalent and polyvalent counterions.

### DESCRIPTION OF THE INVENTION

The present invention relates to a process for preparing an article from a thermoplastic composition, comprising the steps of:
melt blending from 80 - 98.5 % by weight of a polyamide resin with 1.5 - 20 % by weight of an alkylene aryl polyester sulfonate salt copolymer having metal sulfonate units represented by the formula: 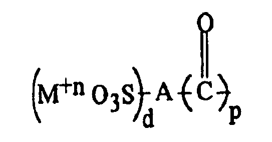 or the formula:

   (M⁺ⁿ O₃S)_{d}-A-(OR"OH)ₚ

   where p = 1-3, d = 1-3, p+d = 2-6, M is a metal with a valency, n = 1-5, and A is an aryl group containing one or more aromatic rings where the sulfonate substituent is directly attached to an aryl ring, R" is a divalent alkyl group and the metal sulfonate group is bound to the polyester through ester linkages,
   pelletizing said melt blend;
   forming the pelletized melt blend into an article through one of extrusion, injection molding, or fiber drawing; and
   contacting the article with an aqueous cationic dye solution.

Polymer Base Component. The polymer used as the base, or matrix, polymer in the practise of this invention is selected from polyamides.

Polyamides include those synthesised from lactams, alpha-omega amino acids, and pairs of diacids and diamines. Such polyamides include, but are not limited to, polycaprolactam [polyamide 6], polyundecanolactam [polyamide 11], polylauryllactam [polyamide 12], poly(hexamethylene adipamide) [polyamide 6,6], poly(hexamethylene sebacamide) [polyamide 6,10], poly(hexamethylene dodecanediamide) [polyamide 6,12], and copolymers and blends thereof. In one embodiment of the invention, the polyamide is selected from polyamide 6 and polyamide 6,6.

Dyeability Enhancer Component. The cationically dyeable / anionic dye resistant component in the present invention functions as a dyeability enhancer. The dyeability enhancer of the present invention, the polyester ionomers, are defined as polyester polymers derived from the reaction residue of an aryl carboxylic acid sulfonate salt, an aromatic dicarboxylic acid, an aliphatic dicarboxylic acid, an aliphatic diol or any of their ester-forming derivatives. The said polyester ionomers comprise some monovalent and/or divalent sulfonate salt units represented by the formula 1A:

(Mⁿ⁺O₃S)_{d} - A - (C=O)ₚ-

or formula 1B:

(Mⁿ⁺O₃S)_{d} - A - (OR"OH)p

wherein p = 1-3, d = 1-3, and p + d = 2-6, and A is an aryl group containing one or more aromatic rings: for example, benzene, naphthalene, anthracene, biphenyl, terphenyl, oxy diphenyl, sulfonyl, diphenyl or alkyl diphenyl, where the sulfonate substituent is directly attached to an aryl ring. These groups are incorporated into the polyester through carboxylic ester linkages. The aryl groups may contain one or more sulfonate substituents (d = 1-3) and may have one or more carboxylic acid linkages (p = 1-3). Groups with one sulfonate substituent (d = 1) and two carboxylic linkages (p = 2) are preferred. M is a metal, with valency n = 1-5. Preferred metals are alkali metals or alkaline earth metals, where n = 1 or 2. Zinc and tin are also preferred metals. R" is an alkyl spacer group: for example, -CH₂CH₂-, -CH₂CH₂OCH₂CH₂-, -CH(CH₃)CH₂-, -CH₂CH₂CH₂-, -CH₂CH₂CH₂CH₂-.

Typical sulfonate substituents that may be incorporated into the metal sulfonate polyester copolymer may be derived from the following carboxylic acids or their ester-forming derivatives: sodium sulfoisophthalic acid, potassium sulfoterephthalic acid, sodium sulfonaphthalenedicarboxylic acid, calcium sulfoisophthalate, potassium 4,4'-di(carbomethoxy)biphenyl sulfonate, lithium 3,5-di(carbomethoxy)benzene sulfonate, sodium p-carboxymethoxybenzene sulfonate, dipotassium 5-carbomethoxy-1,3- disulfonate, sodio sulfonaphthalene-2,7-dicarboxylic acid, 4-lithio sulfophenyl-3,5-dicarboxybenzene sulfonate, 6-sodio sulfo-2-naphthyl-3,5-dicarbomethoxybenzene sulfonate and dimethyl-5-[4-(sodiosulfo)phenoxy] isophthalate. Other suitable sulfonate carboxylic acids and their ester-forming derivatives are described in US patents 3 018 272 and 3 546 008.

The most preferred sulfonate polyesters are derived from lithium or sodium 3,5-dicarbomethoxybenzene sulfonate.

Preferred ionomer polyester polymer comprises divalent ionomer units represented by the formula 2:

-(C=O)- Ph ( R ) (SO₃⁻M⁺) - (C=O)-

wherein R is hydrogen, halogen, alkyl or aryl, and M is a metal.

In one embodiment, the polyester ionomer has the formula 3: 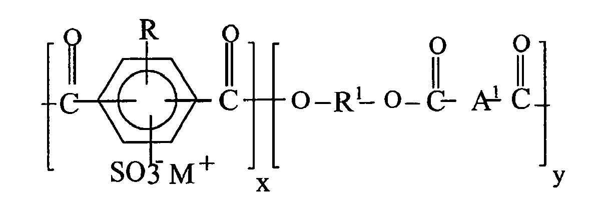 where the ionomer units, x, are from 0.1 - 50 mole percent of the polymer with 5 to 13 mole percent being preferred and 8 to 12 mole percent being especially preferred.

Most preferably R is hydrogen. It is also preferred that the polyester sulfonate resin be water insoluble. In general water insoluble resins will be of high molecular weight (IV greater than or equal to 0.2dl/g in 60/40 phenol / tetrachloroethane solution) and have less than 15 mole percent sulfonate units in the polyester chain. In one embodiment, sulfonate copolymer polyester resins with IV ≥ 0.3dl/g and with 8 - 12 mole percent sulfonate units are used.

Typical glycol or diol reactants, R¹, include straight chain, branched or cycloaliphatic alkane diols and may contain from 2 to 12 carbon atoms. Examples of such diols include, but are not limited to, ethylene glycol; propylene glycol, i.e. 1,2- and 1,3-propanediol; butane diol, i.e. 1,3- and 1,4-butanediol; diethylene glycol; 2,2-dimethyl-1,3-propanediol; 2-ethyl-2-methyl-1,3-propanediol; 1,3-pentanediol; 1,5-pentanediol, dipropylene glycol; 2-methyl-1,5-pentanediol; 1,6-hexanediol, dimethanol decalin; dimethanol bicyclooctane; 1,4-cyclohexane dimethanol and particularly its cis- and trans-isomers; triethylene glycol, 1,10-decanediol; and mixtures of any of the foregoing. A preferred cycloaliphatic diol is 1,4-cyclohexane dimethanol or its chemical equivalent. When cycloaliphatic diols are used as the diol component, a mixture of cis- and trans-isomers may be used, it is preferred to have a trans-isomer content of 70% or more. Chemical equivalents to the diols include esters, such as dialkyl esters, diaryl esters and the like.

Examples of aromatic dicarboxylic acid reactants, as represented by the decarboxylated residue A¹, are isophthalic acid or terephthalic acid, 1,2-di(p-carboxyphenyl)ethane, 4,4'-dicarboxydiphenyl ether- 4,4'-bisbenzoic acid and mixtures thereof. All of these acids contain at least one aromatic nucleus. Acids containing fused rings can also be present, such as in 1,4-, 1,5- or 2,6-naphthalenedicarboxylic acids. The preferred dicarboxylic acids are terephthalic acid, isophthalic acid or mixtures thereof.

The ionomer copolyesters are selected from poly(ethylene terephthalate) [PET], poly(propylene terephthalate) [PPT] or poly(1,4-butylene terephthalate) [PBT] ionomers. In another embodiment, the polyester metal sulfonate salt copolymers are those that are insoluble in water.

The polyester ionomers described above are incorporated into the matrix polymer during a melt-compounding step prior to fiber spinning, of injection molding.

The amount of polyester ionomer(s) used in the practice of the present invention will vary depending on the types and amounts of dyes used to obtain any particular color. In one embodiment, polyester ionomer(s) are used in an amount of about 0.5 to 75 % by weight of the total composition. In a second embodiment, polyester ionomer(s) are used in an amount of about 1 to 30 % by weight of the total composition. In another embodiment, wherein the composition is used in a melt formulation for spinning into fiber, polyester ionomers are used in an amount to limit the final sulfur level of between about 200 and 5000 ppm.

Cationic Dye Component. The sulfonate groups of the dyability enhancer of the present invention have a strong tendency to exchange the sodium cation with the dye cation of basic dyes.

In one embodiment of the invention, the dyes are applied as an aqueous solution at a temperature between 80 to 125°C. By a basic dye is meant a colored cationic organic substance such as those containing sulfonium, oxonium, or quaternary ammonium functional groups. Typical cationic dyes are set forth in US patent 5,912,409 to Jenkins, column 4 - 8, which text is incorporated by reference into this specification. A few cationic dyes are set forth below.

| Trade Name | Manufacturer | Color Index Name | Number |
|---|---|---|---|
| Amichrome Black RB | ICI | Acid Black 63 | -- |
| Red RB | " | Acid Red 226 | -- |
| Atalan Fast Orange YF | ATL | Acid Orange69 | -- |
| Orange GRE | " | Acid Orange 62 | -- |
| Yellow GR | " | Acid Yellow 99 | 13900 |
| Inochrome | ICI | Acid Black 52 | -- |
| Victoria Green WB | | Basic Green 4 | |
| Victoria Pure Blue | | Basic Blue 4 | |

Optional Components. Besides the matrix polymers, colorants and polyester ionomers described above, the formulations used in the practise of the present invention may contain other components. These may include, but are not limited to - antioxidants, UV stabilisers, anti-oxidants, anti-ozonants, soil-proofing agents, stain-proofing agents, anti-static additives, anti-microbial agents, lubricants, melt viscosity enhancers, flame retardants, impact modifiers, quenchers, glass, fillers and processing aids.

In one embodiment of the invention, the optional components are present in an amount less than 10, preferably less than 5 percent by weight, more preferably less than about 3 percent by weight based on the total weight of the injection molded article.

In another embodiment wherein the composition is used for an injection-molded article, the optional components are present in an amount of up to 40% with a substantial amount being impact modifiers and / or fillers.

Processing In one embodiment of the present invention, a typical formula comprises a matrix polymer, selected from polyamides as defined above, and one or more sulfonated polyester copolymers, as these are defined above. As stated previously, any or all of the above noted ingredients and optional ingredients and pigments / dyes may be combined in a number of ways, either in a separate compounding step as a concentrate form, or melt-blended altogether one-step in an extruder. In one embodiment, the polyester ionomer in pellet form is melt-blended together with the polymer base polyamide (also in pellet form) in an extruder and then pelletized.

In one embodiment of the invention, the mixture is melt-mixed in an extruder and then pelletized. The melt mixing process is typically carried out in a single or twin screw extruder, with the blended mixture being processed at a temperature in a range of about 232 - 288°C (450 - 550°F). In other embodiments, the resulting resin is processed for a resulting viscosity suitable for further processing such as by extrusion, injection molding, blow molding, co-extrusion, thermoforming, or other process.

In one embodiment wherein the final resin is finally used for injection molding, a composition comprising a blend of polyester and the dyeability enhancer of the present invention has a melt viscosity of from about 250 to 700 Pa.s (2,500 poise to 7,000 poise), preferably 400 to 500 Pa.s (4,000 to 5,000 poise), at a temperature of 266°C with a 5,000 gram weight through a 2.0955 mm (0.0825 inch) orifice.

In another embodiment wherein the resin is to be used for sheet extrusion grade resins, utilizing the aforementioned test for viscosity, the final resin may have a higher viscosity on the order from 1500 to 3000 Pa.s (15,000 to 30,000 poise).

Finished Articles. As indicated above, the resin composition of the present invention can be used in injection-molded articles, blow-molded parts, extruded films, sheets, fibers, textiles, carpets, fabrics, and the like.

The composition can be used in making fibers for use in carpets, rugs, textile, and the like, wherein fibers are drawn from the composition of the present invention via a fiber spinning process. The fiber spinning process may be carried out using techniques and equipment well known to those ordinarily skilled in the arts of fiber melt-spinning.

In one embodiment of the present invention, it is desirable to draw the fibers formed from the sulfonated polyamide blends. Fiber drawing may be achieved by any standard methods known in the art. The product fibers may be subjected to any of the known downstream processes normally carried out on melt-spun fibers, including crimping, bulking, twisting etc., to produce yarns suitable for incorporation into a variety of articles of manufacture, such as apparel, threads, textiles, upholstery and carpets.

EXAMPLES These examples are provided to illustrate the invention but are not intended to limit the scope of the invention.

The polyester ionomers used in the example are commercially available from General Electric Company of Pittsfield, MA. In some examples, they are in the form of SPBT (sulfonated polybutylene terephthalate). The material can be made by polymerization of dimethyl terephthalate, butane diol and dimethyl sodium sulfo isophthalate, containing anywhere between 1 - 20 mole % sodium sulfo isophthalate.

Examples Demonstrating Color Strength Differences - Polyesters. (Not part of the invention). Examples A-C demonstrate the color strength differences between the composition in a finished extruded article and comparative examples without the cationic dyeability enhancer PBT ionomers of the present invention. In the examples, PBT 315 is a polybutylene terephthalate (PBT) commercially available from GE. The cationic enhancer is a 10 mole % PBT ionomer pellet also available from GE (PBTi10). The dye used to demonstrate the color strength differences is PG7 or pigment green 7, available from a number of color concentrate suppliers.

The comparable composition of example A comprises 20% PG7 and 80% PBT 315 powder. Examples B and C are prepared by letting down 2.5% concentrate with 2% TiO2, 3% PBT 315 powder, and 95.5% PBT 315 pellet. The concentrate comprises 20% PG7, 30% PBT 315 powder, and 50% of 10 mole % PBT ionomer pellet. The compositions are extruded and molded into color plaques which are analyzed for chromatic strength at 650 nm, using a spectrometer.

Stronger chromatic strengths are observed in the plaques composed of the dyeability enhancer PBT ionomer of the present invention, comparing Examples B-C with Example A without the enhancer, as shown below:

**Table 1**

| Example | Name | Chromatic Strength at 650 nm | |
|---|---|---|---|
| A | PBT 315 ONLY | 95 | Weak |
| B | PBT w/ PBT ionomer | 108 | Strong |
| C | PBT w/ PBT ionomer | 111 | Strong |

As shown above, the results demonstrate a benefit in utilizing PBT ionomer in the composition / articles: (1) higher chromatic strength is obtained when using similar pigment loadings, presumably due to enhanced pigment dispersion; (2) better reflection of light in the articles; and (3) less pigment could theoretically be utilized to obtain the same chromatic strength as the PBT 315 concentrate.

### Examples Demonstrating Color Strength Differences - Polyesters and PET ionomer. (Not part of the invention)

Examples A-C above are repeated except that 10 mole % sulfonate (PBTi10) is replaced with a 10 mole % PET ionomer also from General Electric Company. The results similarly show the same effect of higher chromatic strength and better reflection of light in the polyester articles comprising the dyeability enhancer PET ionomer.

### Examples Demonstrating Color Strength Differences - Polyamides and PBT ionomer.

The examples A-C above are repeated except with FD&C Red 40 as the color pigment, and the polymer base being a polyamide resin (PA6 from Capron, Honeywell) in compositions with and without the 10 mole % sulfonate (PBTi10). The results show the same effect of higher chromatic strength and better reflection of light in the polyamide articles comprising the dyeability enhancer of the present invention.

### Examples Demonstrating Color Strength Differences - Polyamides and PET ionomer.

The polyamide examples are repeated except with 10 mole % PET ionomer as the dyeability enhancer. The results are as expected with higher chromatic strength and better reflection of light in the articles of the present invention.

Examples Demonstrating Cationic Dye Enhanceability In the following examples, a number of blends are prepared utilizing two different dyeability enhancers of the present invention, PBT ionomer from GE containing 10 mol % sulfonate (PBTi10) and 20 mol % sulfonate (PBTi20), in conjunction with polyamide 66 or PA66 (Vydyne 21, Solutia), polyamide 6 or PA6 (Capron, Honeywell) or polyester PET (recycled polyester).

The compositions are prepared in a twin screw extruder with all ingredients being in pellet form prior to and after extrusion. The pellets are pressed into a film at 260°C at (500°F) using a Carver Press.

**Table 2**

| Example | PBTi10 % | PBTi20 | PA6 % | PA66% | PET % |
|---|---|---|---|---|---|
| 1 | 5 | 0 | 95 | - | - |
| 2 | 12.5 | 0 | 87.5 | - | - |
| 3 | 20 | 0 | 80 | - | - |
| 4 | 0 | 2.5 | 97.5 | - | - |
| 5 | 0 | 6.25 | 93.75 | - | - |
| 6 | 0 | 10 | 90 | - | - |
| 7 | 3 | 0 | - | 97 | - |
| 8 | 10 | 0 | - | 90 | - |
| 9 | 0 | 1.5 | - | 98.5 | - |
| 10 | 0 | 5 | - | 95 | - |
| 11 | 3 | 0 | - | - | 97 |
| 12 | 10 | 0 | - | - | 90 |
| 13 | 0 | 1.5 | - | - | 98.5 |
| 14 | 0 | 5 | - | - | 95 |

Cationic dyes. A number of anthraquinone and azo dyes including Sevron Red LMF, Sevron Yellow 3RL, and Sevron Blue CAN are prepared in following manner: Dye, e.g., Sevron Red LMF (0.012 g), is added to deionized water (200 mL). The solution is heated to a near boil and cooled down to room temperature, giving a pH value between 5 and 6.

Exposure of Samples To Dye Liquor. The films of examples 1-14 are exposed to the dye solutions as follows, with the amount of dye solution being dependent on the weight of the film, with a 250:1 dye solution to film weight for the cationic dyes.

In the experiments with the cationic dyes, an appropriate amount of dye solution is transferred to a series of flasks and films are added to each flask. The solutions are heated to near boil for 40-45 minutes. Finally, the flasks are cooled and the films are removed from solution, rinsed and dried.

The color intensity of each film is measured on a MacBeth CE-7000, transmission mode, Cool White Fluorescent illumination. As shown in Table 3 below, film compositions containing PBT ionomer have an enhanced cationic dye pickup compared with films which do not contain any polyester ionomer (Blends PA66 and PA6).

**Table 3**

| Blend | Cationic dye color | | |
|---|---|---|---|
| | Red (+a) | Blue (-b) | Yellow (+b) |
| 1 | 28.11 | -8.29 | 31.96 |
| 2 | 39.10 | -22.46 | 83.10 |
| 3 | 39.42 | -22.64 | 73.80 |
| 4 | 27.83 | -4.28 | 8.37 |
| 5 | 40.95 | -19.39 | 73.83 |
| 6 | 41.05 | -22.04 | 81.87 |
| 7 | 28.78 | -5.17 | 25.85 |
| 8 | 41.56 | -22.27 | 76.58 |
| PA66 | 11.01 | -0.93 | 5.23 |
| PA6 | 5.83 | -0.57 | 0.92 |

Also as shown in the table above, increasing the amount of PBT ionomer in the blend has the effect of enhancing the enhance cationic dye pickup, e.g., blends 7-8 (PA66) with an increase in color intensity. The same effect is observed in blends comprising of PA6 (blends 1-6), but a limit in dye pickup is reached with blends having 12.5% of PBTi10 (or 6.25% of PBTi20). It is noted that the difference between blends 2 and 3 is much smaller than the difference between blends 1 and 2. Applicants have found that the amount of PBT ionomer in the composition of the present invention can be tuned in order to obtain a specific dye intensity in the final article.

In the examples, the incorporation of PBTi20 in the blends (mass percent) is half of the amount used with PBTi10 but with the same percentage of sulfonate groups being present in the overall blend. As shown in the results, similar color intensity results are obtained for PBTi10 (blends 1-3) and PBTi20 (blends 4-6), indicating that the amount of sulfonate groups dictates the intensity of dyeability. Applicants have found that a higher molar polyester ionomer can be used in applications where less of the ionomeric polymer is desired.

Examples Demonstrating Anionic Dyeability Effects. In this set of examples, colored films are exposed to a solution of distilled water at low pH (approximately = 2) at room temperatures for 15 minutes. Leaching of color is not observed, although films containing PBT ionomer and Sevron Red had a slight color shift from red to a red-purple color. These solutions are next heated to a near boiling. After 10 min, dye leaching is evident in the PA66 and PA6 films. After 15 minutes, slight leaching occurred with films containing the polyester ionomer and PA. No leaching was observed in the pure PBT ionomer film. No further change is observed after 20 minutes. Visual inspection confirms a greater amount of dye leaching with films which do not contain PBT ionomer. It is also noted that PBT ionomer does completely retain the dye and not allow leaching, while blends of PBT ionomer and PA6 and PA66 will show small amounts of leaching, presumably due to the dye molecules being displaced from the PA molecules, and not from the PBT ionomer.

Examples Demonstrating Enhanced Acid Dye Staining. (Not part of the invention). In the next set of examples, the blends of table 2 are exposed to a near boiling Cherry Kool Aid solution and a solution at room temperature. The color intensity of each film is measured on a MacBeth CE-7000. As shown in table 4, film articles containing a higher percentage of the polyester ionomer demonstrate enhanced acid dye staining.

**Table 4 - Anionic dyeing using Cherry Kool Aid**

| Blend | % PBTi | Dye pickup (+a) |
|---|---|---|
| 1 | 5 % PBTi10 | 33.76 |
| 2 | 12.5% PBTi10 | 22.79 |
| 3 | 20 % PBTi10 | 10.39 |
| 4 | 2.5% PBTi20 | 36.56 |
| 5 | 6.25% PBTi20 | 26.82 |
| 6 | 10% PBTi20 | 7.55 |
| 7 | 3% PBTi10 | 49.30 |
| 8 | 10% PBTi10 | 13.35 |
| PA66 | 0 | 48.89 |
| PA6 | 0 | 44.70 |

Besides the amount of the dyeability enhance polyester ionomer, the temperature of the dye solution also plays a role in anionic dyeability. The composition will pick up more anionic dye at higher temperatures (near boiling conditions) as compared to conditions at room temperature. This enhanced pickup is presumably due to a change in morphology of the polymer base as it is heated, with the usually compact structure opens up and allows the dye to pass through. It is noted that Nylon 6, PA6, which already has an open structure as compared to Nylon 66 or PA66, is not affected by temperature.

**Table 5 - Effect of dye solution temperature on anionic dye pickup**

| Film | PA:PBTi | Dye pickup (+a) | |
|---|---|---|---|
| | | Heat | Room Temp |
| PA66 | 90/10 | 26.46 | 4.67 |
| PA66 | 100 | 48.26 | 20.00 |
| PA6 | 80/20 | 10.97 | 12.96 |
| PA6 | 100 | 39.40 | 37.00 |

As shown in the above table, both PA6 and PA66 have a noticeable decrease in dye pickup (as measured by +a values) as the percentage of PBT ionomer is increased. As the amount of PBTi10 increases in blends 1-3, a corresponding decrease in +a values is observed, from 33.76 down to 10.39. The resistance to acid dyeing is presumably due to the increase in sulfonated groups, which repel the anionic dye, and is observed with both PBTi10 and PBTi20.

The results also show that acid dye resistance can be obtained when half the amount of PBTi20 is incorporated into a blend as compared to PBTi10, e.g., Applicants find that blend 1, which contains 5% of PBTi10, has a +a value = 33.76, as compared to blend 4, which contains 2.5% of PBTi20, with a +a value = 36.56. The similar values suggest that the amount of sulfonate groups will dictate the degree of acid dye stain resistance. This corresponds well to the results observed with the cationic dyes.

Examples with different types of polyamides. Applicants have also found that the amount of the dyeability enhancer required varies according to the morphology of the polymer base, e.g., PA6 has a more open structure than PA66, thus requiring more dyeability enhancer. As shown table 4, blend 2 which comprises PA6 and 12.5% PBTi10, has +a = 22.79; while blend 8, which comprises PA66 and 10% PBTi10, has +a = 13.35. For PA6 to have a similar +a value as PA66, nearly twice the amount of PBT ionomer has to be incorporated in the blend, i.e., blend 3 which comprises PA6 and 20 % PBTi10, has +a = 10.39, a value similar to that of blend 8.

Applicants have also surprisingly found that the dyeability enhancer of the present invention will repel anionic dyes, such as Red 40, which is found in Cherry Kool Aid. When blended in PA66, the temperature at which the dye is applied will dictate the amount of dye repelled. Near 100 °C, Applicants find that blends of PBTi and PA66 pick up more dye than at room temperature, presumably due to the alpha-crystalline structure relaxing and allowing dye molecules to pass through. Thus, blends of a polymer base comprising a polyamide or a polyester plus the dyeability enhancer of the present invention, a polyester ionomer, can anionically dyed at higher temperatures and still provide repulsion at room temperature, for use in applications including fibers and injection molded parts.

## Claims

1. A process for preparing an article from a thermoplastic composition, comprising the steps of:
melt blending from 80 - 98.5 % by weight of a polyamide resin with 1.5 - 20 % by weight of an alkylene aryl polyester sulfonate salt copolymer having metal sulfonate units represented by the formula: 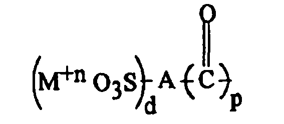 or the formula:
(M⁺ⁿ O₃S)_{d}-A-(OR"OH)ₚ
where p = 1-3, d = 1-3, p+d = 2-6, M is a metal with a valency, n = 1-5, and A is an aryl group containing one or more aromatic rings where the sulfonate substituent is directly attached to an aryl ring, R" is a divalent alkyl group and the metal sulfonate group is bound to the polyester through ester linkages,
pelletizing said melt blend;
forming the pelletized melt blend into an article through one of extrusion, injection molding, or fiber drawing; and
contacting the article with an aqueous cationic dye solution.

2. The process of claim 1, wherein the alkylene aryl polyester sulfonate salt has the formula: 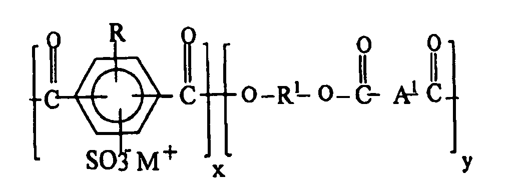 wherein x is from 0.1 - 50 mole percent of the polymer, R is hydrogen, R¹ is a straight chain, branched or cycloaliphatic C₁-C₁₂ alkylene, A¹ is isophthalic acid, terephthalic acid, 1,2-di(p-carboxyphenyl)ethane, 4,4'-dicarboxydiphenyl ether-4,4'-bisbenzoic acid or mixtures thereof.

3. The process of claim 2, wherein x = 0.5-15 mole percent, R¹ is C₂-C₈ alkyl, and A1 is derived from iso- or terephthalic acid or a mixture of the two.

4. The process of claim 1 where p = 2, d = 1, and M is an alkaline or alkaline earth metal, zinc or tin.

5. The process of claim 2, wherein the metal sulfonate polyester is an alkylene polyester wherein A1 is the residue from a diacid component of iso- or terephthalic acid and derivatives thereof and R1 is the residue from a diol component selected from the group consisting essentially of ethylene glycol, propanediol, butanediol, or cyclohexanedimethanol, and derivatives thereof.

6. The process of claim 1 where the metal sulfonate salt unit is a sulfo iso- or tere-phthalate.

7. The process of claim 1, wherein said basic dye is a cationic dye containing sulfonium, oxonium, or quaternary ammonium functional groups.

## Patentansprüche

1. Verfahren zur Herstellung eines Gegenstandes aus einer thermoplastischen Zusammensetzung, umfassend die Schritte:
Schmelzmischen von 80 bis 98,5 Gew.-% eines Polyamidharzes mit 1,5 bis 20 Gew.-% eines Alkylenarylpolyestersulfonatsalz-Copolymers, das Metallsulfonat-Einheiten aufweist, die durch die Formel: 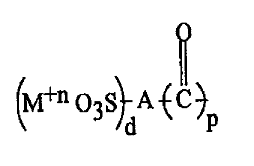 oder die Formel:
(M⁺ⁿ O₃S)_{d}-A-(OR"OH)ₚ
dargestellt sind,
wobei p = 1 - 3, d = 1 - 3, p + d = 2 - 6 ist, M ein Metall mit einer Ladungszahl ist, n = 1 - 5 ist, und A eine Arylgruppe ist, die einen oder mehrere aromatische Ringe enthält, wobei der Sulfonatsubstituent direkt an einen Arylring gebunden ist, R" eine zweiwertige Alkylgruppe ist, und wobei die Metallsulfonatgruppe durch Esterbindungen an den Polyester gebunden ist;
Pelletieren der Schmelzmischung;
Formen der Schmelzmischung zu einem Gegenstand durch ein Verfahren ausgewählt aus Extrudieren, Spritzgießen oder Faserziehen, und Kontaktieren des Gegenstandes mit einer wässrigen, kationischen Farbstofflösung.

2. Verfahren nach Anspruch 1, bei dem das Alkylenarylpolyestersulfonatsalz die folgende Formel aufweist: 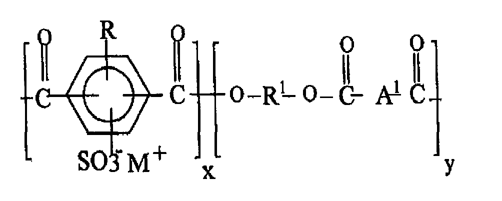 wobei x von 0,1 bis 50 Mol-% des Polymers ist, R Wasserstoff ist, R¹ eine unverzweigte Kette, ein verzweigtes oder cycloaliphatisches C₁-C₁₂-Alkylen ist, und A¹ Isophthalsäure, Terephthalsäure, 1,2-Di(p-carboxyphenyl)ethan, 4,4'-Dicarboxydiphenylether-4,4'-bisbenzoesäure oder Gemische davon ist.

3. Verfahren nach Anspruch 2, bei dem x = 0,5 - 15 Mol-% ist, R¹ ein C₂-C₈-Alkyl ist, und A¹ von Iso- oder Terephthalsäure oder von einem Gemisch der beiden abgeleitet ist.

4. Verfahren nach Anspruch 1, bei dem p = 2, d = 1 und M ein Alkali- oder Erdalkalimetall, Zink oder Zinn ist.

5. Verfahren nach Anspruch 2, bei dem der Metallsulfonatpolyester ein Alkylenpolyester ist, wobei A¹ der Rest einer Disäurekomponente von Iso- oder Terephthalsäure oder Derivaten davon ist, und R¹ der Rest einer Diolkomponente ist, die aus der aus im wesentlichen aus Ethylenglykol, Propandiol, Butandiol oder Cyclohexandimethanol und Derivaten davon bestehenden Gruppe ausgewählt ist.

6. Verfahren nach Anspruch 1, bei dem die Metallsulfonatsalz-Einheit ein Sulfoisophthalat oder ein Sulfoterephthalat ist.

7. Verfahren nach Anspruch 1, bei dem der basische Farbstoff ein kationischer Farbstoff ist, der funktionelle Sulfonium-, funktionelle Oxonium oder funktionelle quaternäre Ammoniumgruppen enthält.

## Revendications

1. Procédé pour la fabrication d'un article à partir d'une composition thermoplastique, comprenant les étapes suivantes :
mélanger à la coulée de 80 - 98,5 % en poids d'une résine polyamide avec 1,5 - 20 % en poids d'un copolymère de sel de sulfonate de polyester alkylène aryle ayant des unités représentées par la formule suivante : 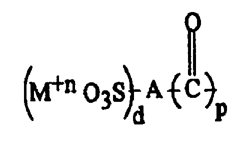 ou la formule :
**(M⁺ⁿ O₃S)_{d}-A-(OR"OH)ₚ**
dans laquelle p = 1-3, d = 1-3, p+d = 2-6, M est un métal ayant une valence, n = 1-5, et A est un group aryle contenant un ou plusieurs anneaux aromatiques, dans lesquelles le substituent sulfonate est lié directement à un anneau aryle, R" est un groupe alkyle divalent et le groupe sulfonate de métal est lié au polyester par des liens d'ester, pelletiser ledit mélange de coulée ;
former le mélange de coulée pelletisé en forme d'un article par l'un de l'extrusion, le moulage par injection ou le tirage de fibre ; et
faire contacter l'article avec une solution colorante aqueuse cationique.

2. Procédé selon la revendication 1, dans lequel le sel de sulfonate de polyester alkylène aryle a la formule suivante : 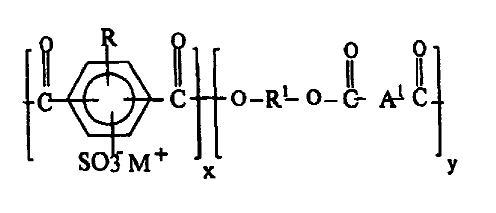 dans laquelle x est de 0,1 - 50 pour cent en moles du polymère, R est hydrogène, R¹ est un alkylène C₁-C₁₂ à chaîne droite, ramifiée ou cycloaliphatique, A¹ est l'acide isophtalique, l'acide téréphtalique, l'éthane de 1,2-di(p-carboxyphényle), l'acide 4,4'-dicarboxydiphénylether-4,4'-bisbenzoïque ou des mélanges de ceux-ci.

3. Procédé selon la revendication 2, dans lequel x = 0,5-15 pour cent en moles, R¹ est alkyle C₂-C₈ et A¹ est dérivé de l'acide iso- ou téréphtalique, ou un mélange des deux.

4. Procédé selon la revendication 1, dans lequel p = 2, d=1, et M est un métal alcalin ou alcalino-terreux, le zinc ou l'étain.

5. Procédé selon la revendication 2, dans lequel le polyester sulfonate de métal est un polyester alkylène dans lequel A¹ est le résidu d'un composant diacide d'acide iso- ou téréphtalique et des dérivés de ceux-ci et R¹ est le résidu d'un composant diol sélectionné parmi le groupe consistant sensiblement en l'éthylène glycol, le propane diol, le butane diol ou le cyclohexane diméthanol, et les dérivés de ceux-ci.

6. Procédé selon la revendication 1, dans lequel l'unité de sel sulfonate de métal est un sulfo iso- ou sulfo téréphtalat.

7. Procédé selon la revendication 1, dans lequel le colorant basique est un colorant cationique contenant des groupes sulfonium, oxonium, ou des groupes ammonium quaternaires fonctionnels.
